# EUROPEAN PATENT SPECIFICATION

(11) **EP 0 440 455 B1**
(45) Date of publication and mention of the grant of the patent: **14.12.1994**
(21) Application number: 91300732.4
(22) Date of filing: 30.01.1991
(51) Int. Cl.: B01D 19/00, F04D 9/00

(54) **A method and an apparatus for separating gas from a suspension containing gas**
Verfahren und Vorrichtung zum Abtrennen von Gasen aus Gas enthaltenden Suspensionen
Procédé et dispositif pour la séparation de gaz d'une suspension contenant du gaz

(30) Priority: 02.02.1990 FI 900525
(43) Date of publication of application: 07.08.1991
(73) Proprietor: A. AHLSTROM CORPORATION, 29600 Noormarkku (FI)
(72) Inventor: Elonen, Jorma, SF-42300 Jämsänkoski (FI); Lehtinen, Jouni, SF-45100 Kouvola (FI)
(74) Representative: Gilmour, David Cedric Franklyn

(56) References cited:
- DE-B- 1 041 872
- DE-B- 1 183 376
- GB-A- 2 085 526
- US-A- 3 290 864
- US-A- 4 201 555

## Description

The present invention relates to a method and an apparatus for separating gas from a suspension containing gas, which suspension in this context refers generally to a liquid medium, which is possibly mixed with some solid material(s), such as fibers. Also vapors can well be considered as gas. The method and apparatus in accordance with the present invention can well be applied in the pulp and paper industry for separating gas from fibrous sludges and filtrates containing gas.

There are many different methods and apparatuses for separating gas from liquids. Most literature on such separation relates to separating vapor in fuels from the actual fuels. Very often such publications relate to gas/vapor separation in aircraft fuels. Mostly, the known characteristic of the centrifugal pump to separate gaseous fractions from the liquid being pumped is utilized, which again can be seen in a poorer pumping result and the uneven operation of the pump. Considerably well running apparatuses have been developed to operate with such kind of pumps for guiding the gas from in front of the impeller to discharge without causing any disturbances in the operation of the pump. Relevant examples of this kind of apparatuses are, e.g. SE Patent SE-B-202 830 and US Patents US-A-3,271,933; US-A-3,276,187; US-A-3,290,864 and US-A-4,201,555. All said publications relate to a single-stage gas separation, whereby gas is separated from a liquid at least to such an extent that the residual gas does not disturb the pumping process. In some cases the main purpose of the process in addition to pumping is gas discharge, but the centrifugal pump is not able to separate in one stage all the gas in the suspension it is pumping. However, for example, in the pulp industry, the air or some other gas in the fiber suspension always disturbs the treatment of suspension, for example washing and bleaching processes. It is, therefore, usual that at least prior to the paper machine the suspension flow is guided to a large vessel, which is provided with a reduced pressure, whereby the gases in the suspension are separated and emerge as bubbles at the surface of the suspension in the vessel. Such a vessel is introduced, for example, in US Patent US-A-2,642,950. On the other hand, there are also oversize store vessels, to which, for example, filtrate from washers and paper machines is gathered for the purpose that, when liquid settles in the vessel, gases separate and emerge as bubbles at the surface. Also chemicals are used for preventing foaming, the purpose of which chemicals is to prevent the harmful effects of the gas in the liquid.

All these gas discharge methods cause problems. Large vessels, both store vessels and gas discharge vessels require a lot of space and thus, due to their size are very expensive. On the other hand, the emissions of said vessels are also harmful, since the gas separating from the filtrate or suspension is rarely pure air, but contains a lot of chemical vapors. Furthermore, different chemicals, which are used for minimizing the foaming, cause environmental risks, because they easily flow to the sewer system entrained in the waste water.

The present invention relates to a gas separation apparatus, the purpose of which is at least to replace the above described large or otherwise harmful apparatuses and methods. Our invention is characterized in that it is intended to be mounted with a centrifugal pump preferably for separating gas. The apparatus in accordance with our invention is considerably small and thus easily arranged into both new and also already existing plants.

The method in accordance with the present invention is characterized in that at least a portion of the suspension is introduced by a centrifugal pump into a centrifugal separation or is subjected by a centrifugal pump to a centrifugal separation and is introduced by the centrifugal pump into a further centrifugal separation, and the suspension is divided at least once into two fractions, of which the heavier portion or fraction containing less gas is discharged from the apparatus and the lighter portion or fraction containing more gas is returned to the suction side of the centrifugal pump.

The apparatus in accordance with the present invention is characterized in that the casing of the centrifugal pump is connected to a centrifugal separator for dividing the suspension into two fractions, said separator having a conduit for the discharge of the heavier fraction from the separator and a conduit for returning the lighter fraction to a channel leading to the suction side of the pump.

The apparatus in accordance with the present invention and the method utilized with said apparatus are described below in more detail, by way of example, with reference to the accompanying drawings, in which:
Fig. 1 is a schematic illustration of an apparatus in accordance with an embodiment of the invention;
Fig. 2 is a schematic illustration of an apparatus in accordance with a second embodiment of the invention; and
Fig. 3 is a schematic illustration of an apparatus in accordance with a third embodiment of the invention.

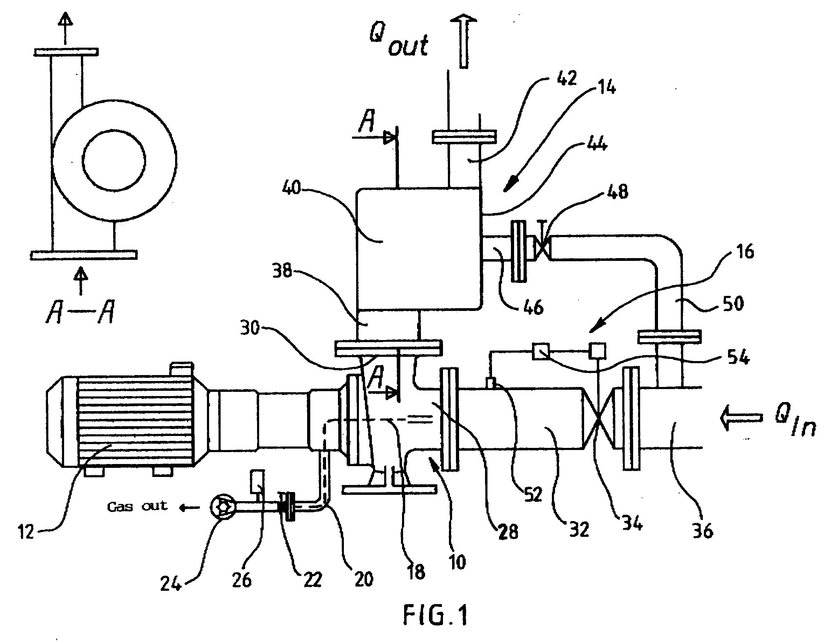

According to Fig. 1 the apparatus in accordance with this embodiment mainly comprises a centrifugal pump 10, a drive means 12 therefor, a gas discharge unit 14 of a centrifugal type separator and a control circuit 16. The centrifugal pump 10 is of gas separating type and so the drawing schematically illustrates a gas discharge system of pump 10. It comprises a channel 18 inside the pump, which channel joins an exterior gas discharge pipe 20, which is connected through a valve 22 to a suction pump 24, which can be, for example, a so called Nash-pump. The drawing also illustrates a control valve 26 for controlling the reduced pressure generated by the suction pump 24. The centrifugal pump 10 has, as known, a suction opening 28 and a pressure opening 30. A suction duct 32 is mounted to the suction opening and said duct 32 is connected by means of a valve 34 to the inlet pipe 36 for the suspension.

The gas discharge unit 14 has been connected by means of a pipe 38 to the pressure opening of the centrifugal pump 10. The gas discharge unit 14 comprises a cylindrical chamber 40, to which pipe 38 joins tangentially and to which also the discharge pipe 42 for the suspension joins tangentially. Pipe 38 for the inflowing suspension is located at the opposite end of chamber 40 relative to the discharge pipe 42 for the suspension. Chamber 40 also has two ends, of which end 44 on the side of the discharge pipe 42 is provided with discharge pipe 46 for the fraction containing gas which pipe 46 is located in the middle of the end 44 and is connected by means of a valve 48 to a conduit 50 leading to the inlet pipe 36 for the suspension. The control circuit 16 comprises a pressure sensor 52 connected to the suction duct 32 and a control unit 54, which is connected to valve 34 to regulate the operation of said valve.

The above mentioned apparatus operates in such a way that the suspension being treated is drawn by means of pump 10 via suction duct 32 through valve 34 from inlet pipe 36. The flow is constricted by valve 34 in such a way that a reduced pressure is generated in the suction duct and in the suction opening 28 of the pump, facilitating the separation of gas from the suspension. By means of pressure sensor 52 in control circuit 16 and control unit 54 the pressure in the suction duct is maintained high enough to prevent the suspension from boiling due to the reduced pressure. Optimized in this way the amount of gas separating from the suspension in front of the impeller is as great as possible and the gas is discharged from the centrifugal pump 10 via the conventional route. Thus centrifugal pump 10 pumps suspension through pressure opening 30 and the gas content of said suspension is considerably lower than that of the suspension in the inlet pipe 36.

The suspension is supplied to gas discharge chamber 40 tangentially from pressure opening 30 via pipe 38. In chamber 40 when the suspension circulates at a high speed along the wall of the chamber, gas is separated from the suspension to the center of the chamber when the suspension is forcibly pressed due to the centrifugal force against the wall. The rapidly circulating suspension is discharged from the chamber 40 to the discharge pipe 42 and the gas or the fraction containing a lot of gas is discharged via gas discharge pipe 46. Since there is little gas left in the suspension when it flows to the gas discharge chamber 40, it is likely that not much clean gas is separated, but by means of valve 48 the suspension flow must be continuously adjusted to be very low in order to maximize the gas separation. Said suspension flow is supplied back to the inlet pipe 36 for the suspension so that it flows again both to the separation in the pump 10 and the centrifugal separation in the gas discharge chamber 40.

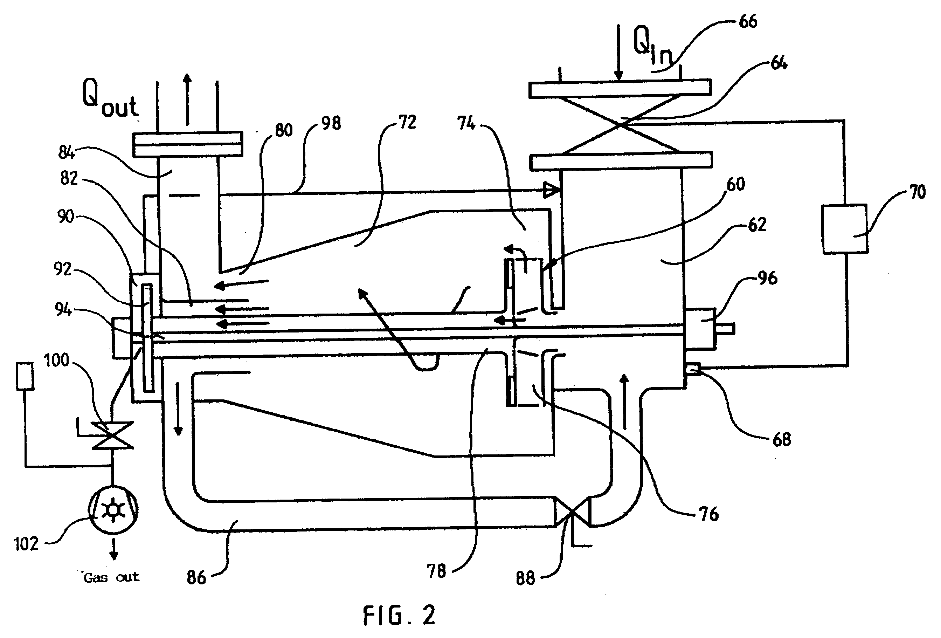

Fig. 2 illustrates a second embodiment of the present invention, which is still based on a gas discharging centrifugal pump 60. The suction side of pump 60 is provided with a chamber 62, which is connected by means of a valve 64 to an inlet pipe 66 for the suspension. Valve 64 is adjusted in the above described way by means of a pressure sensor 68 and a control unit 70. The pressure opening of centrifugal pump 60 is connected to inlet end 74 of a gas discharge cyclone 72 arranged to the rear side of the pump relative to the suction opening of the pump, or as is shown in the drawing, the casing of pump 60 is radially open leading the suspension radially to the inlet end 74 of said cyclone. However, the gaseous fraction separated in front of the impeller is removed from in front of the impeller and led along channel 78 to the opposite end 80 of the cyclone. The suspension circulating in cyclone 72 gathers, due to the centrifugal force, the lightest fraction, in other words the gaseous fraction in the suspension, concentrically against the wall outside channel 78, which fraction flows to a separate annular channel 82 at the end 80 of cyclone 72. The heavy fraction circulating in cyclone 72 is discharged from the apparatus through a conduit 84 at end 80 of the cyclone. The lighter fraction which has flowed from the cyclone to the annular channel 82 is led along pipe 86 by means of a valve 88 to chamber 62 preceding pump 60, wherefrom it flows back again to the gas discharge process. The fraction, which has flowed along channel 78 and has been discharged from in front of the impeller, is guided to a chamber 90, which has an impeller 92 rotating therein, and which impeller is preferably mounted on a shaft 94 connected to the same drive means 96 for impeller 76 of pump 60. The purpose of impeller 92 is to separate the suspension from the medium which may possibly have flowed along channel 78 and to return it from chamber 90 along pipe 98 to chamber 62 preceding pump 60 to be led back again to the gas discharge process. Clean gas is led from chamber 90 by means of a valve 100 to a suction pump 102 and therethrough out of the apparatus. The more detailed operation of the apparatus substantially corresponds the operation of an embodiment in accordance with Fig. 1.

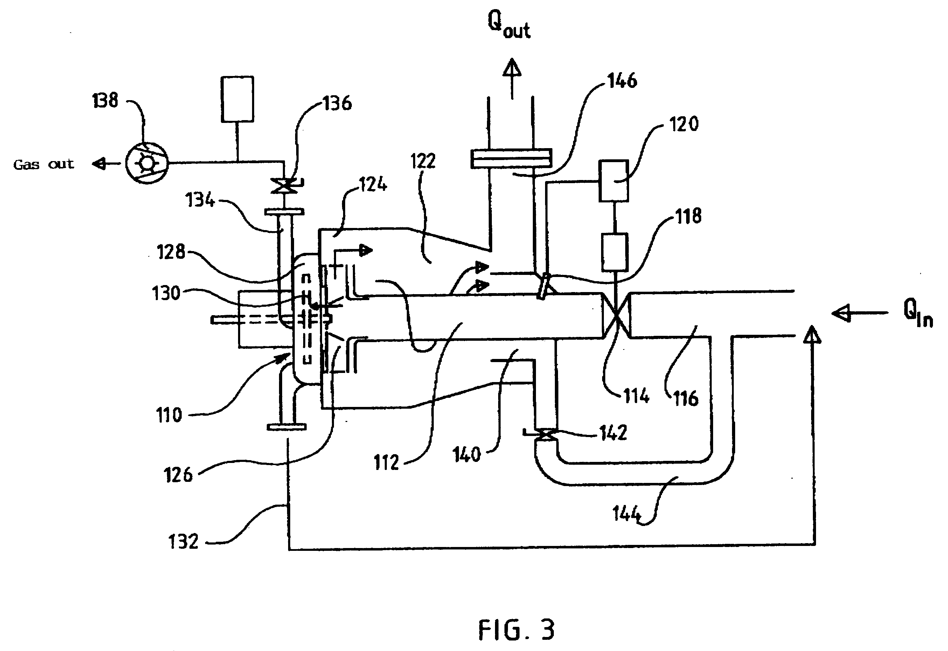

Fig. 3 illustrates a third embodiment, which is also based on utilizing a gas discharging centrifugal pump 110. The suspension to be treated is supplied to centrifugal pump 110 through a suction duct 112, a valve 114 and an inlet pipe 116. The operation of valve 114 is regulated according to the signals given by pressure sensor 118 to control unit 120 in a similar manner as in the other embodiments. The pressure opening of centrifugal pump 110 may be either connected to the inlet end 124 of cyclone 122 tangentially or as in the embodiment of the drawing the shell of the centrifugal pump 110 is radially open and feeds the suspension radially to the inlet end 124 of the cyclone 122. The gas separated in front of impeller 126 of centrifugal pump 110 is discharged through the openings of impeller 126 to a chamber 128 on the back side of the impeller, in which a secondary impeller 130 separates the liquid suspension from the gas and returns the suspension along pipe 132 to inlet pipe 116 of the suspension. The gaseous fraction again is conventionally discharged from the apparatus through a pipe 134, a valve 136 and suction duct 138. Since the gas discharge cyclone 122 is in this embodiment arranged on the same side of the casing as suction duct 112, the light fraction from the suspension circulating in the cyclone accumulates to the vicinity of the outer surface of suction duct 112, wherefrom it is discharged to an annular channel 140, which is connected to inlet pipe 116 for the suspension by means of a valve 142 and a pipe 144. Thus the lighter fraction is returned from the cyclone back to the inlet to be circulated in the gas discharge apparatus. The heavier fraction circulating along the outer wall of cyclone 122 is discharged through a conduit 146 from the apparatus.

As can be seen in the above description, a new kind of gas discharge system gas been developed, which can be utilized more effectively than its predecessors to discharge gas from the material being pumped. Yet, it has to be noted that the arrangements mentioned in all shown embodiments also concern the analogical arrangement alternatives which can be applied in the purpose. For example, the pressure sensor which can be a temperature sensor as well or alternatively, some other detector, which detects the vaporization of the liquid in one way or the other.

## Claims

1. A method of separating gas from a suspension containing gas, whereby at least a portion of the suspension is introduced by a centrifugal pump into a centrifugal separation or is subjected by a centrifugal pump into a centrifugal separation and is introduced by the centrifugal pump to a further centrifugal separation, and the suspension is divided at least once into two fractions, of which the heavier portion or fraction containing less gas in discharged from the apparatus and the lighter portion or fraction containing more gas is returned to the suction side of the centrifugal pump.

2. The method in accordance with claim 1, **characterized** in that gas is separated from the suspension in the centrifugal pump prior to the suspension being fed to said centrifugal separation and the gas is led out of the apparatus.

3. The method in accordance with claim 1, **characterized** in that the light fraction is separated from the suspension in the centrifugal pump prior to the suspension being fed to said centrifugal separation and the light fraction is led to a separate separation, in which the lighter fraction thereof is discharged from the apparatus and the heavier fraction thereof is led back to the suction side of the centrifugal pump.

4. The method in accordance with claim 2 or 3, **characterized** in that a reduced pressure is arranged to act on the suction side of the centrifugal pump, by means of which the separation of the gaseous fraction from the suspension is intensified.

5. The method in accordance with claim 4, **characterized** in that the pressure on the suction side of the centrifugal pump is adjusted to be higher than the pressure leading to the vaporization of the liquid.

6. The method in accordance with claim 5, **characterized** in that the reduced pressure on the suction side of the centrifugal pump is adjusted by a valve being controlled according to the temperature and/or pressure or otherwise dependent on the vaporization of the liquid.

7. An apparatus for separating gas from a suspension containing gas, which apparatus includes a gas discharging centrifugal pump (10,60,110) having an impeller, a casing and gas discharge means, **characterized** in that the casing of said pump (10, 60, 110) is connected to a centrifugal separator (14, 72, 122) for dividing the suspension into two fractions, said separator (14, 72, 122) having a conduit (42, 84, 146) for the discharge of the heavier fraction from the separator and a conduit (46, 82, 140) for returning the lighter fraction to a channel (36, 62, 116) leading to the suction side of the pump.

8. The apparatus in accordance with claim 7, **characterized** in that the centrifugal separator (72, 122) is arranged in communication with the pump (60, 110) in such a way that the inlet end (74, 124) of the separator (72, 122) forms the casing of the pump.

9. The apparatus in accordance with claim 7, **characterized** in that the centrifugal separator (14) is tangentially connected to a pressure opening (30) of the casing of the pump (10).

10. The apparatus in accordance with claim 8 or 9, **characterized** in that the centrifugal separator (14, 72, 122) is of cyclone type, the cyclone cone diminishing from the inlet end (74, 124) towards the discharge end (80).

11. The apparatus in accordance with claim 8, **characterized** in that a centrifugal separator (72) is arranged on the rear side of the pump (60) relative to the suction opening of the said pump (60).

12. The apparatus in accordance with claim 8, **characterized** in that a centrifugal separator (122) is arranged on the front side of the pump (110) relative to the suction opening of the said pump (110).

13. The apparatus in accordance with claim 11, **characterized** in that the gas discharge means of the centrifugal pump (60) include an axial channel (78) for leading the lighter fraction separated in the said pump (60) to a separate separator apparatus (90) arranged into communication with the discharge end (80) of the centrifugal separator (72) for dividing said fraction into a gaseous fraction and a liquid fraction.

14. The apparatus in accordance with claim 11, **characterized** in that an axial annular channel (82) is arranged in the centrifugal separator (72) for leading the lighter fraction, which is separated from the fraction which has flowed through the separator, to a pipe (86) leading to the suction side of the said pump (60).

15. The apparatus in accordance with claim 7, **characterized** in that a valve (34, 64, 114) controlled according to the pressure and/or temperature of the suction side is arranged on the suction side of the centrifugal pump (10, 60, 110).

## Patentansprüche

1. Verfahren zur Abscheidung von Gas aus einer gashaltigen Suspension, wobei mindestens ein Teil der Suspension durch eine Kreiselpumpe einer Fliehkraftabscheidung zugeführt wird oder durch eine Kreiselpumpe einer Fliehkraftabscheidung ausgesetzt wird und durch die Kreiselpumpe einer weiteren Fliehkraftabscheidung zugeführt wird, und die Suspension in mindest zwei Fraktionen aufgeteilt wird, wovon der schwerere Teil oder die weniger Gas enthaltende Fraktion aus der Vorrichtung abgeführt und der leichtere Teil oder die mehr Gas enthaltende Fraktion zur Saugseite der Kreiselpumpe zurückgeführt wird.

2. Verfahren gemäß Anspruch 1, dadurch gekennzeichnet, daß Gas aus der Suspension in der Kreiselpumpe abgeschieden wird, bevor die Suspension besagter Fliehkraftabscheidung zugeführt und das Gas aus der Vorrichtung herausgeleitet wird.

3. Verfahren gemäß Anspruch 1, dadurch gekennzeichnet, daß die leichte Fraktion aus der Suspension in der Kreiselpumpe abgeschieden wird, bevor die Suspension besagter Fliehkraftabscheidung zugeführt wird und die leichte Fraktion einer Abscheidung zugeführt wird, wo die leichtere Fraktion derselben aus der Vorrichtung herausgeleitet und die schwerere Fraktion derselben zurück zur Saugseite der Kreiselpumpe geleitet wird.

4. Verfahren gemäß Anspruch 2 oder 3, dadurch gekennzeichnet, daß ein reduzierter Druck sich auf die Saugseite der Kreiselpumpe auswirkend arrangiert wird, wodurch die Abscheidung der gasförmigen Fraktion aus der Suspension intensiviert wird.

5. Verfahren gemäß Anspruch 4, dadurch gekennzeichnet, daß der Druck auf der Saugseite der Kreiselpumpe höher eingestellt wird als der Druck, der zur Verdampfung der Flüssigkeit führt.

6. Verfahren gemäß Anspruch 5, dadurch gekennzeichnet, daß der reduzierte Druck auf der Saugseite der Kreiselpumpe durch ein Ventil verstellt wird, das in Abhängigkeit von Temperatur und/oder Druck oder auf andere Weise in Abhängigkeit von der Verdampfung der Flüssigkeit gesteuert wird.

7. Vorrichtung zur Abscheidung von Gas aus einer gashaltigen Suspension, welche Vorrichtung eine Gas absaugende Kreiselpumpe (10, 60, 110) mit einem Laufrad, einem Gehäuse und Gasabzugsmitteln umfaßt, dadurch gekennzeichnet, daß das Gehäuse der Pumpe (10, 60, 110) mit einem Fliehkraftabscheider (14, 72, 122) zur Aufteilung der Suspension in zwei Fraktionen verbunden ist, welcher Abscheider (14, 72, 122) einen Stutzen (42, 84, 146) für die Ableitung der schwereren Fraktion aus dem Abscheider und einen Stutzen (46, 82, 140) für die Rückführung der leichteren Fraktion in einen Kanal (36, 62, 116) aufweist, der zur Saugseite der Pumpe führt.

8. Vorrichtung gemäß Anspruch 7, dadurch gekennzeichnet, daß der Fliehkraftabscheider (72, 122) in Verbindung mit der Pumpe (60, 110) auf solche Weise angeordnet ist, daß das Eintrittsende (74, 124) des Abscheiders (72, 122) das Gehäuse der Pumpe bildet.

9. Vorrichtung gemäß Anspruch 7, dadurch gekennzeichnet, daß der Fliehkraftabscheider (14) tangential mit einer Drucköffnung (30) des Gehäuses der Pumpe (10) verbunden ist.

10. Vorrichtung gemäß Anspruch 8 oder 9, dadurch gekennzeichnet, daß der Fliehkraftabscheider (14, 72, 122) vom Typ her ein Zyklon ist, wobei sich der Zyklonkonus vom Eintrittsende (74, 124) zum Austrittsende (80) hin verjüngt.

11. Vorrichtung gemäß Anspruch 8, dadurch gekennzeichnet, daß der Fliehkraftabscheider (72) auf der Rückseite der Pumpe (60) in hinsicht auf die Saugöffnung der Pumpe (60) angeordnet ist.

12. Vorrichtung gemäß Anspruch 8, dadurch gekennzeichnet, daß der Fliehkraftabscheider (122) auf der Vorderseite der Pumpe (110) in hinsicht auf die Saugöffnung der Pumpe (110) angeordnet ist.

13. Vorrichtung gemäß Anspruch 11, dadurch gekennzeichnet, daß die Gasabzugsmittel der Kreiselpumpe (60) einen axialen Kanal (78) zur Leitung der leichteren in der Pumpe (60) abgeschiedenen Fraktion in einen getrennten in Verbindung mit dem Austrittsende (80) des Fliehkraftabscheiders (72) angeordneten Abscheider, um besagte Fraktion in eine gasförmige und eine flüssige Fraktion zu teilen.

14. Vorrichtung gemäß Anspruch 11, dadurch gekennzeichnet, daß im Fliehkraftabscheider (72) ein axialer ringförmiger Kanal (82) angeordnet ist zur Leitung der leichteren Fraktion, die von der den Abscheider durchflossenen Fraktion getrennt worden ist, in ein zur Saugseite der Pumpe (60) führendes Rohr (86).

15. Vorrichtung gemäß Anspruch 7, dadurch gekennzeichnet, daß ein Ventil (34, 64, 114), das in Abhängigkeit von Druck und/ oder Temperatur auf der Saugseite verstellt wird, auf der Saugseite der Kreiselpumpe (10, 60, 110) vorgesehen ist.

## Revendications

1. Procédé pour séparer un gaz d'une suspension contenant du gaz, de manière qu'au moins une partie de la suspension soit introduit par une pompe centrifuge à la séparation centrifuge ou soit soumise par une pompe centrifuge à une séparation centrifuge et soit introduit par la pompe centrifuge à une séparation centrifuge ultérieure, et la suspension est divisée au moins en deux fractions dont la fraction plus lourde ou la fraction contenant moins de gaz est évacuée du dispositif et la partie plus légère ou la fraction contenant plus de gaz est renvoyée au côté d'aspiration de la pompe centrifuge.

2. Procédé selon la revendication 1, caractérisé en ce que le gaz est séparé de la suspension dans la pompe centrifuge avant que la suspension soit fournie à ladite séparation centrifuge et le gaz est guidé hors du dispositif.

3. Procédé selon la revendication 1, caractérisé en ce que la fraction légère est séparée de la suspension dans la pompe centrifuge avant que la suspension soit founie à ladite séparation centrifuge et la fraction légère est fournie à une séparation à part, dans laquelle sa fraction plus légère est déchargée du dipositif et sa fraction plus lourde est renvoyée au côté d'aspiration de la pompe centrifuge.

4. Procédé selon la revendication 2 ou 3, caractérisé en ce qu'une dépression est disposée pour produire de l'effet sur le côté d'aspiration de la pompe centrifuge, au moyen de laquelle la séparation de la fraction gazeuse à partir de la suspension est intensifiée.

5. Procédé selon la revendication 4, caractérisé en ce que la pression sur le côté d'aspiration de la pompe centrifuge est réglée à être plus élevée que la pression provoquant l'évaporation du liquide.

6. Procédé selon la revendication 5, caractérisé en ce que la dépression sur le côté d'aspiration de la pompe centrifuge est réglée par une vanne étant contrôlée selon la température et/ou pression ou autrement dépendant de l'évaporation du liquide.

7. Dispositif pour séparer un gaz d'une suspension contenant du gaz, lequel dispositif inclut une pompe centrifuge pour l'évacuation de gaz (10,60,110) comportant une hélice, un logement et un moyen pour l'évacuation de gaz, caractérisé en ce que le logement de ladite pompe (10, 60, 110) est relié à un séparateur centrifuge (14, 72, 122) pour diviser la suspension en deux fractions, ledit séparateur (14, 72, 122) comportant une conduite (42, 84, 146) pour la décharge de la fraction plus lourde du séparateur et une conduite (46, 82, 140) pour renvoyer la fraction plus légère à un canal (36, 62, 116) conduisant au côté d'aspiration de la pompe.

8. Dispositif selon la revendication 7, caractérisé en ce que le séparateur centrifuge (72, 122) est disposé en communication avec la pompe (60, 110) de façon telle que l'extrémité d'admission (72, 124) du séparateur (72, 122) forme le logement de la pompe.

9. Dispositif selon la revendication 7, caractérisé en ce que le séparateur centrifuge (14) est raccordé tangentiellement à l'ouverture de pression (30) du logement de la pompe (10).

10. Dispositif selon la revendication 8 ou 9, caractérisé en ce que le séparateur centrifuge (14, 72, 122) est du type cyclone, le cône du cyclone possédant un diamètre décroissant de l'extrémité d'admission (74, 124) vers l'extrémité d'évacuation (80).

11. Dispositif selon la revendication 8, caractérisé en ce qu'un séparateur centrifuge (72) est disposé sur le côté arrière de la pompe (60) par rapport à l'ouverture d'aspiration de ladite pompe (60).

12. Dispositif selon la revendication 8, caractérisé en ce qu'un séparateur centrifuge (122) est disposé sur le côté avant de la pompe (110) par rapport à l'ouverture d'aspiration de ladite pompe (110).

13. Dispositif selon la revendication 11, caractérisé en ce que les moyens d'évacuation de gaz de la pompe centrifuge (60) comprennent un canal axial (78) pour amener la fraction plus légère séparée dans ladite pompe (60) à un dispositif de séparation à part (90) disposé en communication avec l'extrémité d'évacuation (80) du séparateur centrifuge (72) pour diviser ladite fraction en fraction gazeuse et fraction liquide.

14. Dispositif selon la revendication 11, caractérisé en ce qu'un canal annulaire axial (82) est disposé dans le séparateur centrifuge (72) pour conduire la fraction plus légère, séparée de la fraction qui a circulée à travers le séparateur, au tuyau (86) conduisant au côté d'aspiration de ladite pompe (60).

15. Dispositif selon la revendication 7, caractérisé en ce qu'une vanne (34, 64, 114) contrôlée selon la pression et/ou température du côté d'aspiration est disposée au coté d'aspiration de la pompe centrifuge (10, 60, 110).
